# EUROPEAN PATENT SPECIFICATION

(11) **EP 3 790 378 B1**
(45) Date of publication and mention of the grant of the patent: **23.08.2023**
(21) Application number: 19724899.0
(22) Date of filing: 13.05.2019
(51) Int. Cl.: A01G 9/24

(54) **A SOLAR MODULE AND A METHOD OF MAKING A SOLAR MODULE**
SOLARMODUL UND VERFAHREN ZUR HERSTELLUNG EINES SOLARMODULS
MODULE SOLAIRE ET PROCÉDÉ DE FABRICATION D'UN MODULE SOLAIRE

(30) Priority: 11.05.2018 GB 201807648
(43) Date of publication of application: 17.03.2021
(73) Proprietor: SOLIVUS LIMITED, Epsom, Surrey KT17 BP (GB)
(72) Inventor: PARKER-SWIFT, Jo, Toys Hill, Kent TN16 1QE (GB); BAKER, James, Toft, Cambridge CB23 2RF (GB); CLEMENTS, Jez, Toft, Cambridge CB23 2RF (GB); PFLAUMER, Hans, Toft, Cambridge CB23 2RF (GB); CRUNDWELL, Ben, Toft, Cambridge CB23 2RF (GB); LAAKSO, Aki, Toft, Cambridge CB23 2RF (GB); HUBBARD, Simon, Toft, Cambridge CB23 2RF (GB); KNOPS-MCKIM, Finlay, Toft, Cambridge CB23 2RF (GB)
(74) Representative: Boult Wade Tennant LLP
(86) International application number: PCT/GB2019/051304
(87) International publication number: WO 2019/215460

(56) References cited:
- WO-A1-2008/009916
- WO-A1-2014/131027
- GB-A- 865 954

## Description

The present invention relates to the solar module and a method of making a solar module. In existing poly-tunnels and greenhouse structures, it is known to add solar photovoltaic cells directly to the walls and roof of these structures, to use the space occupied by the structure to additionally generate electricity. There is however a wide range of different poly-tunnels and greenhouse structures, which means adding the solar photovoltaic cells to such structures requires a bespoke attachment mechanism for each structure. Attaching solar photovoltaic cells to such structures, which are delicate, is also difficult without damaging the structure during the attachment process.

DE102011077425, CN205694659 U and WO2008/009916 discloses the idea of a frame to which rigid solar panels are attached.

CN206564943 U discloses the idea of flexible solar cell of a monocrystalline silicon which is provided for mounting brackets for attachment to a greenhouse. The panels include energy storage and lighting panels to provide lighting to the greenhouse. The flexible panels are attached via brackets which are provided to increase the rigidity of the structure.

According to a first aspect of the present invention, there is therefore provided a method according to claim 1.

By using a flexible sheet a thin film organic photovoltaic solar material which is adhered to an arcuate frame or flexible backing, the present invention provides, for the first time, a great simplified solar arrangement.

In particular, as compared to CN206564943 U, the present invention offers numerous advantages. There is no need to manufacture bespoke curved panels as the material can simply be cut to the required size and adhered on the frame or backing.

The arcuate structure is ideal for use, for example, being placed over part of an arcuate poly-tunnel as it does not take up any additional space. Further, it is also highly useful in a rooftop application where the arcuate nature of the solar collector has been found to be more efficient than a convenient flat panel connector for the same footprint area. It can also be placed over existing rooftop equipment such as an air conditioning unit if space is tight.

The solar module is cheap and lightweight as it does not require the complexity and weight of a bracketed connection and the thin film organic photovoltaic material is much lighter than the monocrystalline silicone.

A further advantage is the flexibility of the system as, in order to make modules of different sizes, it is simply necessary to make a frame of a different size and to adhere the material to this. In CN206564943 U, it would be necessary to create a whole new of set of panels for a different size of frame.

The material is preferably supplied on a roll and the sheet is cut from the roll prior to bonding it to the frame.

The method may be used to provide a solar module which is retrofitted across the top of a poly-tunnel or glasshouse. Under these circumstances, the method preferably comprises the step of positioning the frame and sheet of solar fabric adjacent to the poly-tunnel or glasshouse such that the frame is separate from the poly-tunnel or glasshouse and such that the frame and at least one solar and solar material extend across the top of the structure.

An added benefit of the method is that during times when the structure is not being used, such as during winter, the fact that the frame is separate to the structure means the structure can be disassembled with the frame left in place. In this way, solar energy can still be collected in the vicinity of where the structure was located, even without the structure present.

Whilst in some cases the frame may be positioned inside of the structure, the frame may alternatively be positioned over the outside of the structure. The positioning of the frame either inside or outside the structure will depend on a number of independent factors, for instance whether the structure is transparent or not, the type of solar photovoltaic cells used, and the typical climates and weather conditions at the point where the structure is located.

The frame preferably comprises at least one arcuate subassembly which each extends across the frame.

Preferably the frame comprises a plurality of arcuate subassemblies. In this case, the plurality of arcuate subassemblies may be separate from each other, however preferably they are connected together, for instance by being mounted on an arcuate support surface, or by being connected together using a plurality of trusses.

Preferably, the frame comprises a plurality of modular sections. The modular sections are preferably configured to be connected to each other end-to-end. By having the frame comprised of a plurality of modular sections, this allows the frame to be more easily assembled and disassembled. It also makes the frame adaptable for use on structures of different shapes and sizes.

The modular sections allow the possibility of stacking the sections together for ease of transport and storage. As a further possibility, the frame may be deployable between a stored and a deployed configuration. This can apply to a frame which is a single section or it could be the case that each of the modular sections are deployable in this way.

With such an arrangement, the solar cell may be attachable to the frame either before or after it is moved to the deployed configuration.

There are a number of ways in which this can be achieved. For example, the frame can be an inflatable structure. As a further possibility, the frame is formed of a bi-stable material in which the stored configuration comprises a flat roll of the material, and the deployed configuration is an unrolled configuration in which the bi-stable material biases the material from the flat roll into an arcuate configuration. Alternatively, the frame may have a rigid base and an upper arcuate portion held in place by cables attached to the base.

Alternatively, the flexible sheet or backing has a backing has a plurality of sleeves which receive flexible poles forming part of the frame which can be bent into the deployed configuration. Alternatively, the frame is attached to the sheet and in the stored configuration has stored elastic energy used to move the frame to the deployed configuration.

Alternatively, the frame is formed of a plurality of panels hinged together and the frame is deployable to the deployed configured by unfolding the frame at the hinges. In this case, the panels may have an arcuate configuration but are preferably flat. The flat panels are then unfolded to form the arcuate frame.

By employing such a collapsible frame, the solar modules can be readily transported and assembled on the site. Further, in the case of the poly-tunnels, they can be easily redeployed (to allow for seasonal variations). In the case of rooftop applications, this provides a lightweight structure which is again easy to deploy. They can also be easily removed and stored for example should adverse weather conditions be forecast. Preferably, each solar photovoltaic cell is at least partially transparent. In this way, the solar cell still allows some light through into the adjacent structure, for use by plant life located therein.

In some embodiments, at least one solar thermal section may be mounted to the frame. In these embodiments, and when each solar photovoltaic cell is at least partially transparent, each solar thermal section may be mounted behind the at least one partially transparent solar photovoltaic cell. Synergistically, the use of both the solar photovoltaic cell and the underlying solar thermal section ensures as much solar energy is gathered from any solar light which falls on the frame.

To further improve the energy output of the frame, the frame may comprise at least one wind turbine. In this case, and when the frame is formed of a plurality of tubular sections, the wind turbine is preferably located inside one of the tubular sections.

As mentioned above, in some cases the structure may be transparent.

According to a second aspect of the present invention, there is provided a module according to claim 10.

It will be appreciated that the above assembly according to a second aspect of the invention may include any of the functionality as described in connection with the method according to the first aspect of the invention.

The advantages attributable to this aspect of the invention are the same of those attributable to the first aspect.

The frame may be formed as a single component. However, preferably, the frame is modular to allow different sizes of solar collector to be formed simply joining together the appropriate number of modules.

A module may be positioned across the top of structure such as a poly-tunnel or glasshouse such that the photovoltaic cell extends across the top of the structure.

Preferably, the photovoltaic cells from the assembly collectively cover no more than 30% of the surface area of the structure. The surface area is measured as the total area of the sides faces of the structure (including any front and rear faces), along with the area of the top/roof face of the structure. By covering no more than 30% of the surface area of the structure, this has been found to strike a reasonable balance between allowing sufficient sunlight to enter the structure to facilitate plant growth, whilst at the same time ensuring a good recovery of solar energy by the at least one solar photovoltaic cell.

The invention will now be described with reference to the following Figures, in which:
Fig. 1A shows an end view of a first embodiment assembly comprising a structure, a frame, and at least one solar photovoltaic cell mounted to the frame.
Figure 1B shows a perspective view of the assembly from Figure 1A.
Fig. 2A shows an end view of a second embodiment assembly, which again comprises a structure, a frame, and at least one solar photovoltaic cell mounted to the frame.
Figure 2B shows a perspective view of the assembly from Figure 2A.
Fig. 3 shows an end view of a third embodiment assembly.
Fig. 4 shows an end view of a fourth embodiment assembly.
Fig. 5A shows an exploded perspective view of a modular section on which is located a solar photovoltaic cell.
Fig. 5B shows a perspective view of a plurality of the modular sections from Figure 5A, each including a solar photovoltaic cell, wherein the modular sections are connected end-to-end.
Fig. 6A which is not in accordance with the invention shows a perspective view of a modular section comprising an arched face for receiving at least one solar photovoltaic cell.
Fig. 6B which is not in accordance with the invention shows a perspective view of a plurality of the modular sections from Figure 6A, each including a solar photovoltaic cell, wherein the modular sections are connected end-to-end over a structure.
Fig. 7 which is not in accordance with the invention shows a further embodiment assembly comprising a structure, a frame, and at least one solar photovoltaic cell mounted to the frame.
Fig. 8A shows a plan view of a plurality of modular sections connected end-to-end.
Fig. 8B shows a perspective view of a first possible construction for each modular section shown in Fig. 8A.
Fig. 8C which is not in accordance with the invention shows a perspective view of a second possible construction for each modular section shown in Fig. 8A.
Fig. 9A shows a further embodiment of assembly comprising a structure, a frame, and at least one solar photovoltaic cell mounted to the frame, wherein the frame is formed of a plurality of tubular sections.
Fig. 9B shows a perspective view of one of the tubular sections from Fig. 9A.
Fig. 10 shows another embodiment assembly comprising a structure, a frame, at least one wind turbine, and at least one solar photovoltaic cell mounted to the frame.
Fig. 11A shows a perspective view of a tubular section as shown in Fig. 9B, when adapted to receive a wind turbine inside the tubular section.
Fig. 11B shows a sectional view of the tubular section shown in Fig. 11A, taken across its length.
Fig. 12 shows a perspective view of a modular section similar to that shown in Fig. 8B, when adapted to receive a solar thermal section mounted behind at least one partially transparent solar photovoltaic cell located on the modular section.

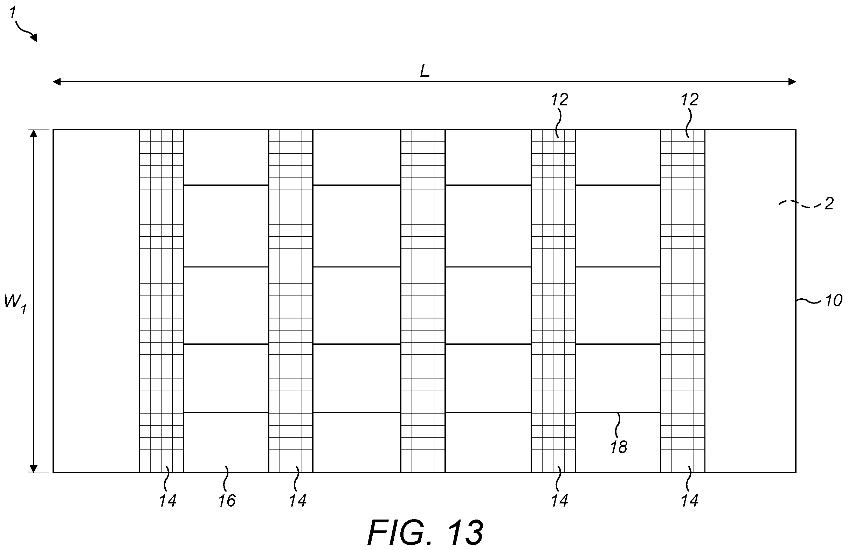

Fig. 13 shows a plan view of an embodiment assembly according to the earlier embodiment assemblies comprising a structure, a frame, and at least one solar photovoltaic cell adhered to the frame, which shows the distribution of each solar photovoltaic cell in relation to the structure.
Fig. 14 is a schematic perspective view of a solar module in a partially deployed state;
Fig. 14A and Fig. 14B are schematic representations of methods of making the module of Fig. 17.
Fig. 15 is a schematic perspective view of a further example of a solar module in a deployed state;
Fig. 16A and Fig. 16B are schematic perspective views of a further example of a solar module in a stored and a deployed configuration respectively;
Fig. 17A and Fig. 17B are schematic perspective views of a further example of a solar module in a stored and a deployed configuration respectively;
Fig. 18 is a schematic cross-section of a further example of a solar module;
Fig. 19A is a schematic perspective view of a further example of a solar module in a stored configuration;
Fig. 19B is a view similar to Fig. 20A in a partially deployed configuration; and
Fig. 19C is a view similar to Figs. 20A and 20B in a fully deployed configuration.

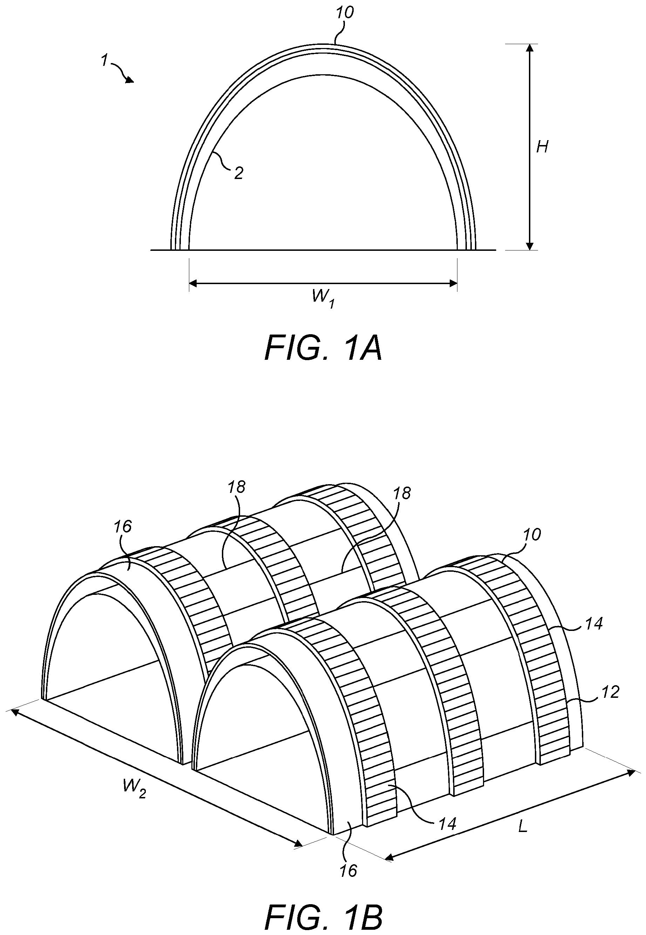

With reference to Figures 1A and 1B, there is shown an assembly 1 comprising a structure 2 in the form of a poly-tunnel or glasshouse. The structure comprises a length L, a width W₁;W₂, and height H. Although not exclusively, most poly-tunnels and glasshouses structures 2 are shaped to have a uniform cross section extending across the width W₁;W₂ and height H dimensions, which is then maintained across the length L of the structure 2.

An aspect of the invention is the positioning of a frame 10 which is separate from, adjacent to, and which extends across the top of, the structure 2. At least one solar photovoltaic cell 12 is adhered to the frame 10 such that the at least one solar photovoltaic cell 12 also extends across the top of the structure 2.

In the case of Figures 1A and 1B, the frame 10 is positioned over the outside of the structure 2, and the frame 10 comprises at least one arcuate subassembly 14 which each extends across the frame 10, wherein at least one solar photovoltaic cell 12 is mounted to each arcuate subassembly 14. It will be appreciated that the number of arcuate subassemblies 14 will depend on the length L of the structure 2, and the number of solar photovoltaic cells 12 required in the assembly 1.

Each arcuate subassembly 14 may be mechanically separated from the remaining arcuate subassemblies 14. However, preferably the arcuate subassemblies 14 are connected together by being mounted on an arcuate support surface 16 (as shown in Figure 1B) separate from, and extending around the outside of, the structure 2. Alternatively, the support surface 16 may be replaced by a plurality of trusses 18 which detachably connect the arcuate subassemblies 14 together, such as those shown in Figure 1B which extend in the length direction L of the structure 2.

Each arcuate subassembly 14 may comprise a plurality of solar photovoltaic cells adhered thereon, connected end-to-end such that these cells span the arcuate assembly in the width direction W. Preferably however, a single flexible solar photovoltaic cell 12 extends across the arcuate subassembly 14is mounted to the frame using an adhesive.

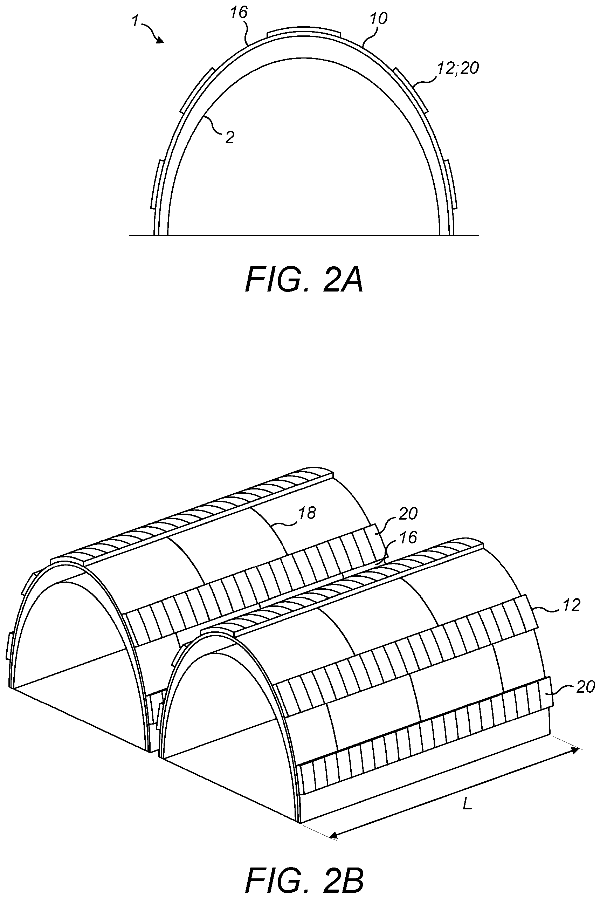

Figs. 2A and 2B show a second embodiment assembly 1, which is similar to that shown in Figs. 1A and 1B, and which has a frame 10 positioned over the outside of a structure 2. In contrast with the assembly shown in Figs. 1A and 1B, each arcuate subassembly 14 in Figs. 2A and 2B is replaced with an elongate subassembly 20 which is substantially straight and which extends across the entire length L, as opposed to the width W₁, of the structure 2.

Each elongate subassembly 20 is either mounted on an arcuate support surface 16 from the frame 10, or detachably connected together by the plurality of trusses 18 which in this embodiment extend in the width direction W₁;W₂ of the structure 2.

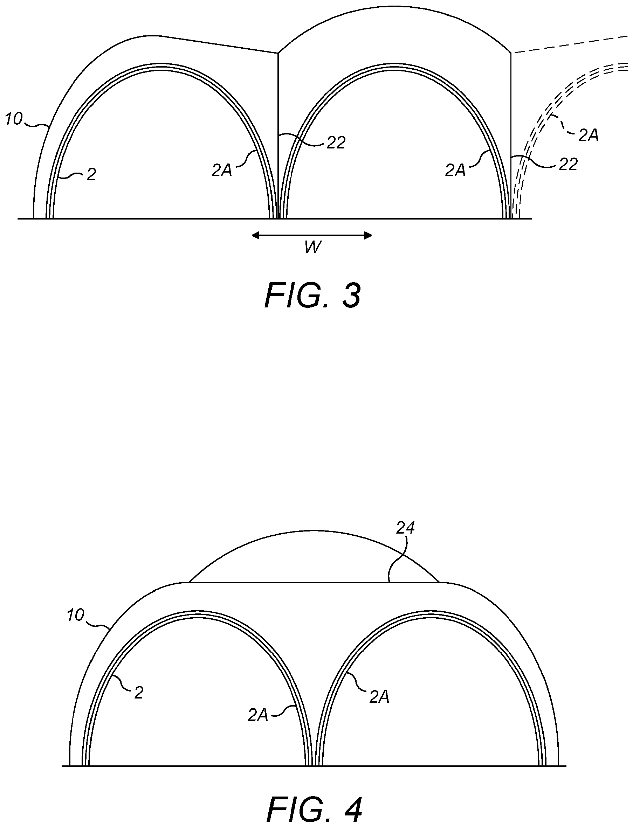

As shown in Figs. 3 and 4, it will be appreciated that the frame 10 may be used to span a poly-tunnel or glasshouse structure 2 comprising a plurality of different sections 2A placed side by side in the width direction W. In the case of Fig. 3, the structure 2 is shown as having two sections 2A with another section 2A shown in dotted lines to indicate how further sections 2A can be added in the width direction W to extend the total width of the structure 2.

Irrespective of the number of sections 2A contained in the structure 2, the frame 10 is separate from, adjacent to, and extends across the top of, the structure, such that at least one solar photovoltaic cell mounted to the frame 10 also extends across the top of the structure. Where necessary, the frame may comprise a support leg 22 that downwardly extends between neighbouring sections 2A of the structure, and which connects to the structure 2 between the neighbouring sections 2A, to provide added support to the frame 10 in this region. Further support to the frame may be provided as shown in Figure 4 via the use of reinforcement ties 24 which extend across the width of the frame 10. Irrespective of the number of support legs 22, and/or reinforcement ties 24, present in the frame 10, the frame is configured to be separate from the structure 2, such that when the structure 2 is disassembled or removed, the frame 10 remains in place and supports its own weight along with the weight of any solar photovoltaic cells mounted thereto.

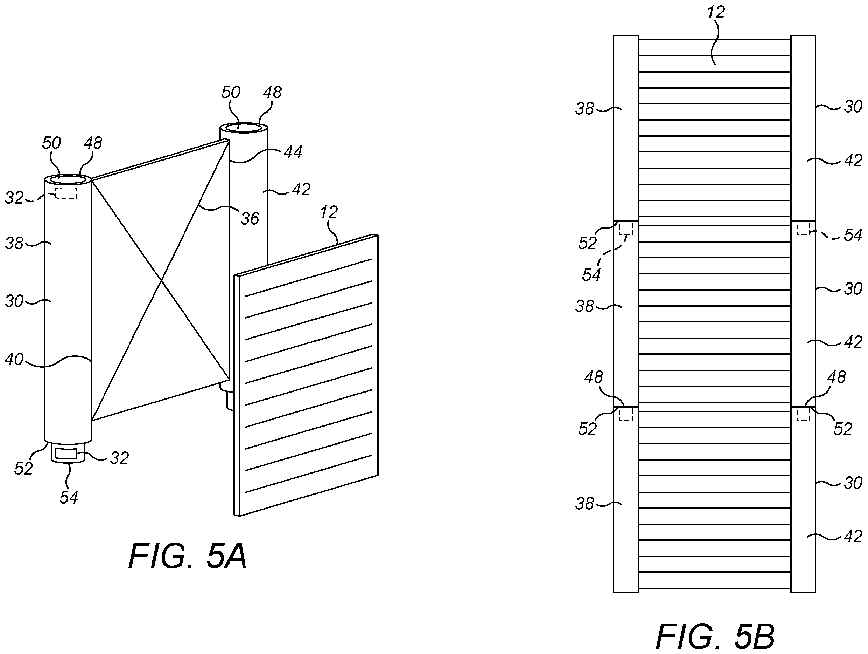

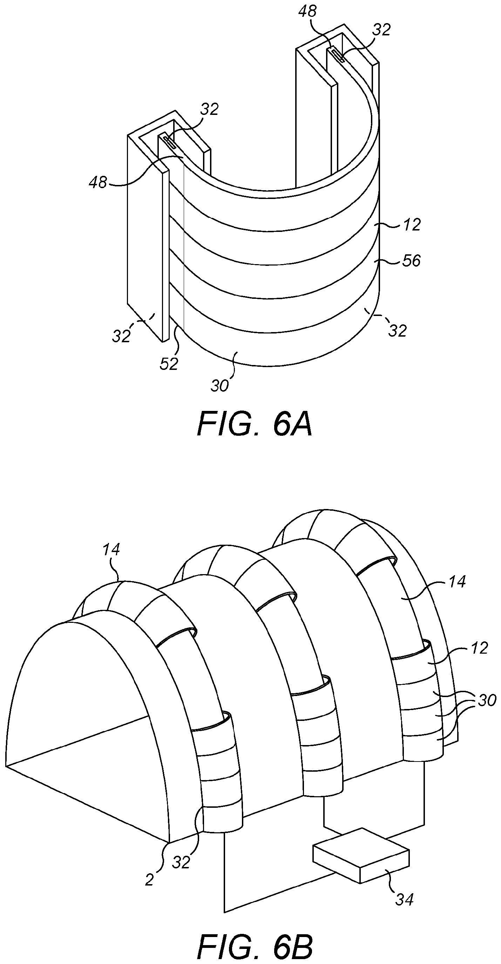

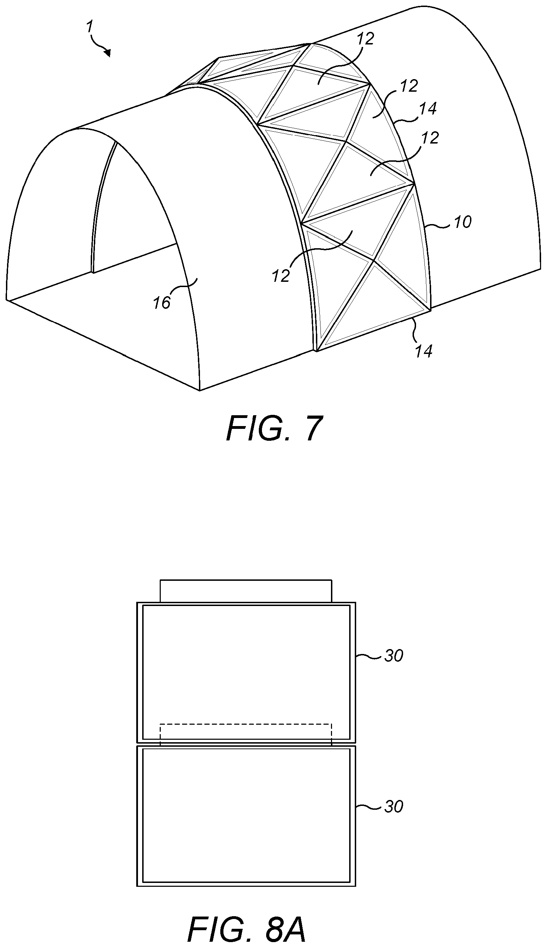

A particularly advantageous configuration for the frame 10 is to have it formed of a plurality of modular sections 30, as shown in the embodiment from Figures 5A-5B, the embodiment from Figures 6A-6B, and the embodiment from Figures 8A-8B. Each modular section 30 is configured to attach to a neighbouring modular section 30 of a similar design, such that the modular sections 30 can be attached together to form either the frame 10 itself, or a part of the frame - for instance an arcuate subassembly 14 or an elongate subassembly 20.

In one mode of operation, each modular section 30 may comprise a respective solar photovoltaic cell 12 (as shown in Figures 5A-5B, Figures 6A-6B, and Figures 8A-8C). In this mode, the ends of each modular section 30 may comprise electrical connectors 32 to allow harnessed solar energy, and also electrical signals, to be passed between the modular sections 30 and an electrical control box 34 associated with the frame 10. The position of the electrical control box is not particularly important. In the case of Figure 6B, the electrical control box 34 is positioned on the ground to the side of the frame 10 and the structure 2.

In another more preferable mode of operation, a single flexible solar photovoltaic cell 12 extends across a plurality of the modular sections 30 of each subassembly 14;20. In this way, the need for electrical connectors 32 at each end of each modular section 30 is removed, since the electrical control box 34 can be connected directly to one portion of the single solar photovoltaic cell 12.

In the case of the modular section 30 shown in Figures 5A-5B, each modular section comprises a planar face 36 for receiving a solar photovoltaic cell 12, and further comprises a first tubular portion 38 extending along a first side 40 of the planar face, and a second tubular portion 42 extending along a second opposite side 44 of the planar face 36. A first end 48 of the tubular portions 38;42 comprises a first engaging means 50 in the form of a cylindrical recess, and a second end 52 of the tubular portions 38;42 comprises a second engaging means 54 in the form of a cylindrical protrusion, which is operable to engage with the cylindrical recess from a neighbouring modular section 30.

For the modular section 30 shown in Figures 6A-6B, each modular section 30 comprises an arched face 56 for receiving a solar photovoltaic cell 12. With the arched face 56, as opposed to a planar face 36, this allows a solar photovoltaic cell 12 with a larger surface area to be positioned on the modular section 30, thus increasing the maximum solar energy output from the modular section 30. The modular section 30 comprises a first end 48 with a first engaging means 50 (not shown in the Figures), and a second end 52 with a second engaging means 54 (not shown in the Figures), which is operable to engage with the first engaging means 50 from a neighbouring modular section 30. It will be appreciated that the shape of these first and second engaging means 50;54 can take any required form to ensure neighbouring modular sections 30 can connect together.

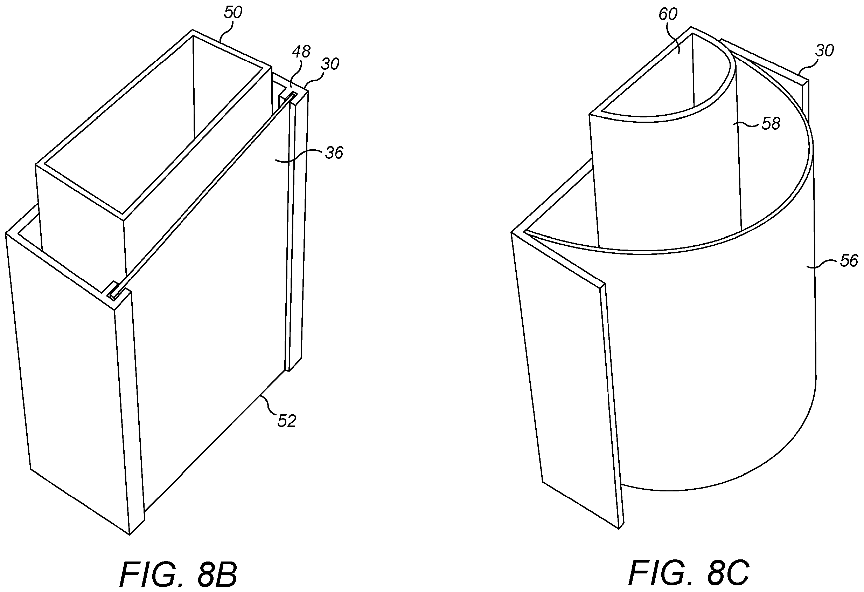

In relation to the modular section 30 shown in Figures 8A-8C, the modular section 30 may have either a planar face 36 for receiving a solar photovoltaic cell 12, as shown in Figure 8B, or an arched face 56 for receiving the solar photovoltaic cell 12 as shown in Figure 8C. In each case, the modular section 30 comprises a first end 48 with a first engaging means 50 (not shown in the Figures) and a second end 52 opposite the first end 48 with a second engaging means 54 (not shown in the Figures). The modular section 30 also comprises an inner channel 58 for defining an interior volume 60 which is separated from the planar face 36 or arched face 56. The interior volume 60 of each modular section 30 may comprise electronics/wiring for transferring electrical energy between the neighbouring modular sections 30, or may be used for storage or other purposes.

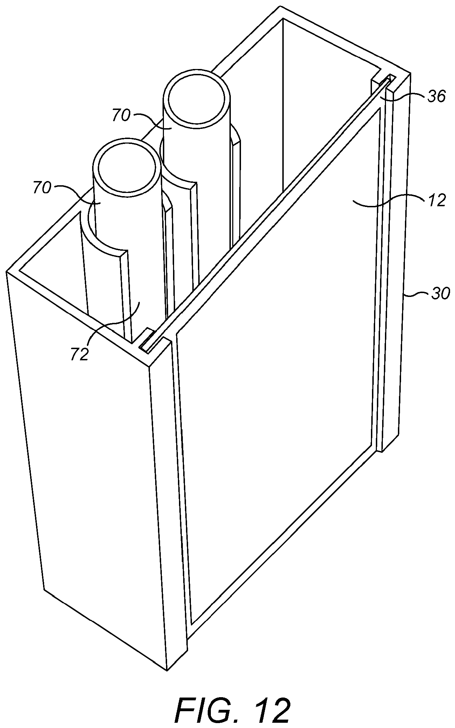

One particularly advantageous configuration for the modular sections 30 is shown in Figure 12, which shows a modular section 30 having similar geometry to that shown in Figure 8B, but without the inner channel 58 and its associated interior volume 60. In this embodiment a solar thermal collector 70, comprising a plurality of fluid pipes 72 containing fluid to be heated, is mounted within the modular section 30 and behind the solar photovoltaic cell 12 located on the planar face 36. To ensure the solar thermal collector 70 is able to efficiently collect solar energy, the planar face 36 and the solar photovoltaic cell 12 associated with the modular section 30 is at least partially transparent.

Another embodiment of frame 10 is shown in Figure 7. In this embodiment, the frame 10 comprises at least one arcuate subassembly 14 which each extends across the frame 10, wherein a plurality of photovoltaic cells 12 are adhered to each arcuate subassembly 14, as also shown in Figure 1B. In this embodiment, the outer surface of each arcuate subassembly 14 is tessellated, such that the arcuate subassembly 14 comprises a plurality of photovoltaic cells 12 orientated at different angles and directions. This helps to ensure that there is always at least one solar photovoltaic cell 12 from the arcuate subassembly 14 which is optimised for collecting solar energy at any particular time during the day.

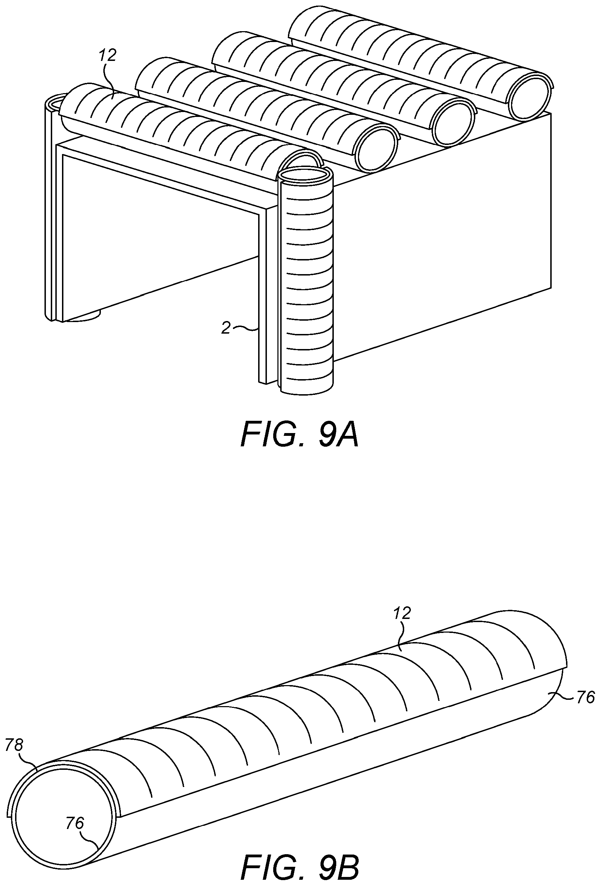

A further embodiment of frame 10 is shown in Figures 9A and 9B. In this embodiment, the frame is formed of a plurality of tubular sections 76. Each tubular section 76 defines an outer face 78 on which is adhered a flexible solar photovoltaic cell 12. The cross section of each tubular section 76 may be any geometrical shape, though is preferably circular. It will be appreciated that the tubular sections 76 may be attached to each other in any required way to ensure they form a stable frame 10 around the structure 2. For example, the tubular sections 76 may be mounted mechanically to each other, or mounted to each other using an adhesive.

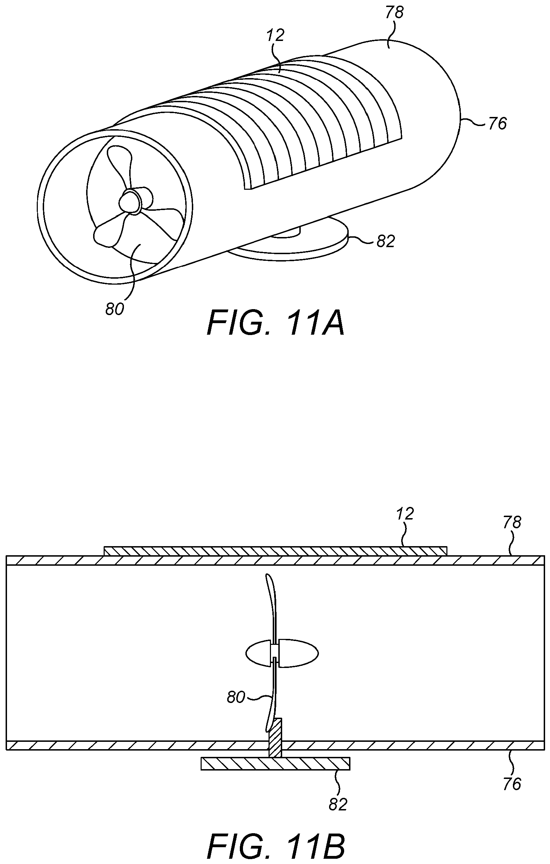

In one particular embodiment, at least one of the tubular sections 76 may comprise a wind turbine 80 located inside of it, as shown in Figures 11A and 11B. In this way, the frame 10 can further harness energy from any strong winds blowing in the vicinity of the structure 2.

As also shown in Figs. 11A and 11B, any of the tubular sections 76 may comprise a stand 82 to enhance its stability.

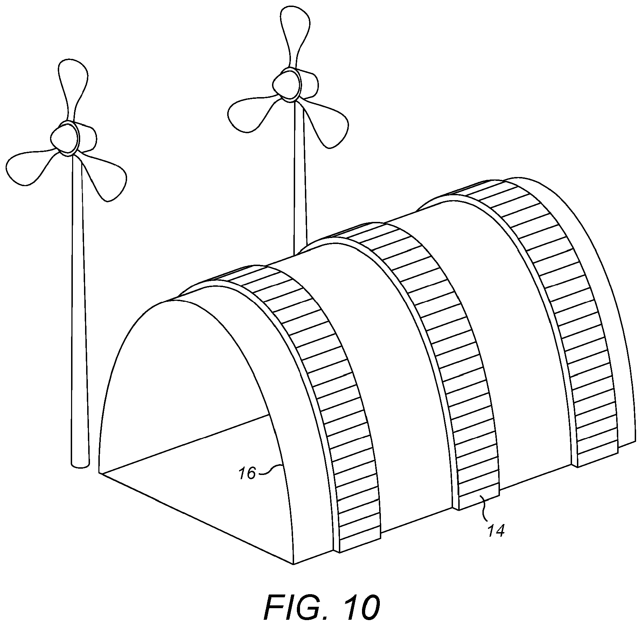

The presence of a wind turbine 80 is not restricted to the embodiment where the frame comprises the tubular sections 76. Indeed, any of the frames 10 described herein may comprise at least one wind turbine, as shown in Figure 10.

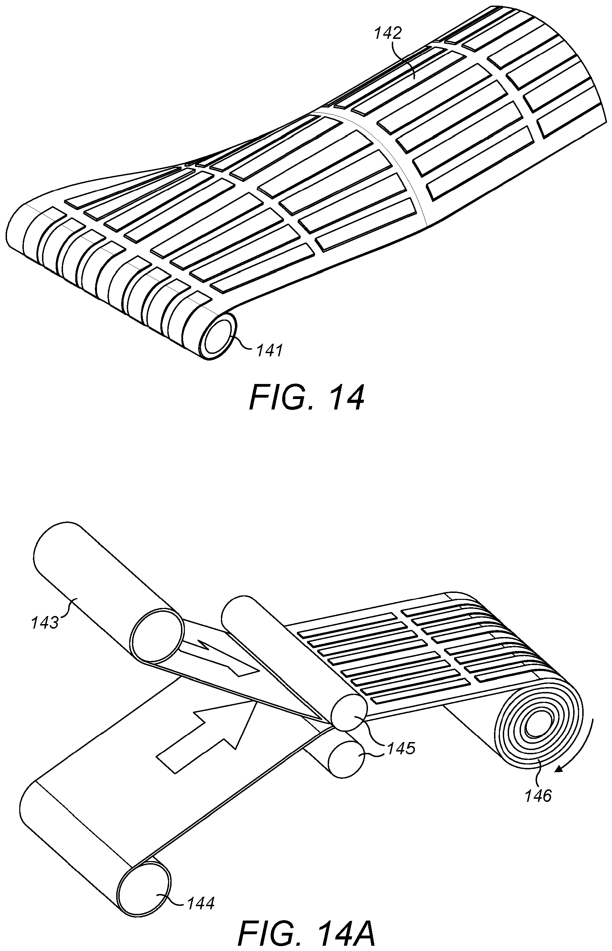

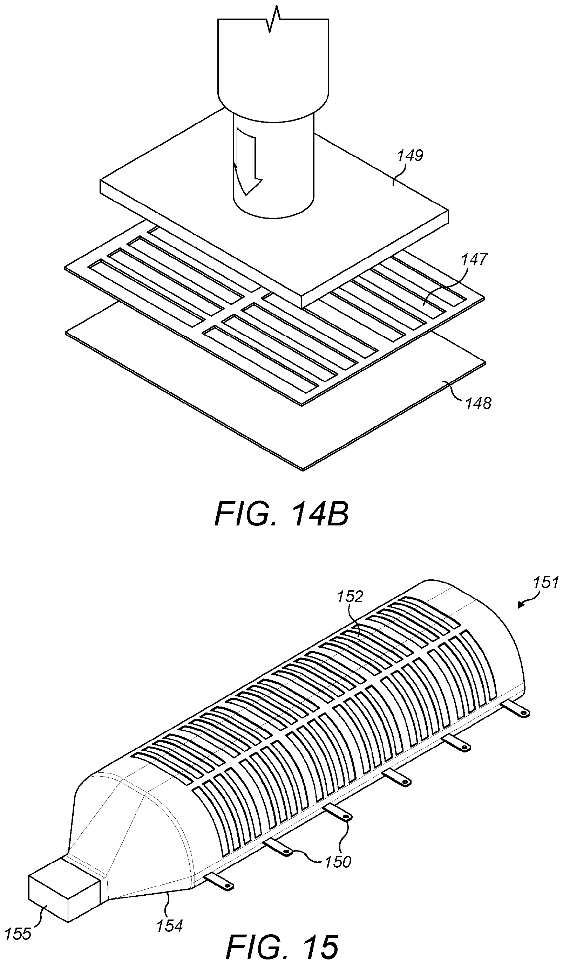

Noting the structures 2 described herein are a poly-tunnel or glasshouse, which are intended to hold plant life, it is preferable that the at least one solar photovoltaic cell 12 from the assembly 1 collectively cover no more than 30% of the surface area of the structure 2. This surface area is measured as the total area of the sides faces of the structure 2 (including any front and rear faces), along with the area of the top/roof face of the structure 2. By covering no more than 30% of the surface area of the structure 2, this has been found to strike a reasonable balance between allowing sufficient sunlight to enter the structure to facilitate plant growth, whilst at the same time ensuring a good recovery of solar energy by the at least one solar photovoltaic cell 12. An example of such an assembly 1, which has a similar shape to that shown in Figures 1A and 1B, is shown in the plan view of Figure 14. Here, the solar photovoltaic cells 12 mounted to each arcuate subassembly 14 collectively cover no more than 30% of the surface area of the underlying structure 2.

In terms of the materials and properties of the solar photovoltaic cells 12 described herein, each solar photovoltaic cell 12 is thin-film, as opposed to crystalline silicon, to allow the cell to better mount to the frame 10 and/or its subassemblies. More preferably, the solar photovoltaic cell 12 is an organic photovoltaic cell, since such organic photovoltaic cells are particularly lightweight and flexible.

Whilst the assemblies described herein have the frame 10 positioned over the outside of the structure 2, it will be appreciated that the frame 10 may instead be positioned inside of structure 2. Indeed, when the solar photovoltaic cells 12 have a positive temperature coefficient (i.e. they perform better at higher temperatures), for instance in the case of organic photovoltaic cells, it is advantageous to have the frame 10, and therefore the solar photovoltaic cells 12, positioned inside the poly-tunnel or glasshouse structure 2, where it is often hotter compared with the outside of the structure 2. This assumes the structure 2 is transparent. Contrastingly, in the case of solar photovoltaic cells 12 which have a negative temperature coefficient (i.e. they perform less effectively at higher temperatures), for instance in the case of crystalline silicon cells, the energy may be more efficiently collected by positioning the frame 10 over the outside of the structure 2.

Figs. 14 to 20 depict a number of solar modules and methods of deploying solar modules. All of these have in common the fact that a solar module may be supplied in a collapsed or stored configuration and can then be assembled into the deployed configuration.

Fig. 14 shows a flat roll of bi-stable material 141 which is supplied as flat roll. In this form, the solar cell is adhesively bonded to a material with bi-stable properties. This may, for example, be a thin sheet of metal which, in an unrolled configuration, will naturally take up an arcuate configuration 142 but, when rolled up, the arcuate configuration will flatten out forming the flat roll 141. This is the type of effect seen in a common metallic tape measure. The solar module can be brought in one or more rolls to the site for deployment. It is then simply unrolled where it takes on the arcuate configuration and can be fastened in place.

As shown in Fig. 14A, the module of Fig. 14 can be formed from an in-line rolling process in which a roll 143 of the solar cell material and a roll 144 of the bi-stable backing are pinched between a pair of rollers 155 with an adhesive therebetween to form an adhesive bond, whereupon the laminate is rolled onto a roll 156 to form a roller from the material 141 as shown in Fig. 14. The substrate may be any of the following: PVC, AVS, vinyl, PC, polystyrene or polypropylene, ETFE, PTFE or thin sheet aluminium or steel. The substrate roll is preferable formed as a bi-stable sheet of material before undergoing the laminating process shown in Fig. 14A. In this process, although it is unrolled, the tension imparted by the rollers 155 and 156 ensures that it remains in its flat configuration.

A second method of making the Fig. 14 arrangement is shown in Fig. 14B. It is a batch process in which an adhesive is provided between the solar cell 147 and the backing 148 before the two are pressed together in a press 149. The press may deform the substrate to impart the bi-stable properties, or the backing may have been formed with bi-stable properties and is held flat during the pressing operation.

In Fig. 15 the frame is in the form of an inflatable sleeve 151 with an arcuate upper portion 152 and a flat base 153. Preferably, the solar cell is attached to the arcuate portion 152 prior to assembly. A cowling 154 provides a connection to an inflation controller which may for example be a low power air pump 155 which can be powered by the solar cell. A number of anchor points 156 are provided to anchor the module in place. Again, this module is really easy to supply in a deflated configuration and simply requires the pump 155 to be turned on to inflate the sleeve 151 into the position shown in Fig. 15. The module can be deflated by venting the sleeve 151 and/or reversing the pump 155.

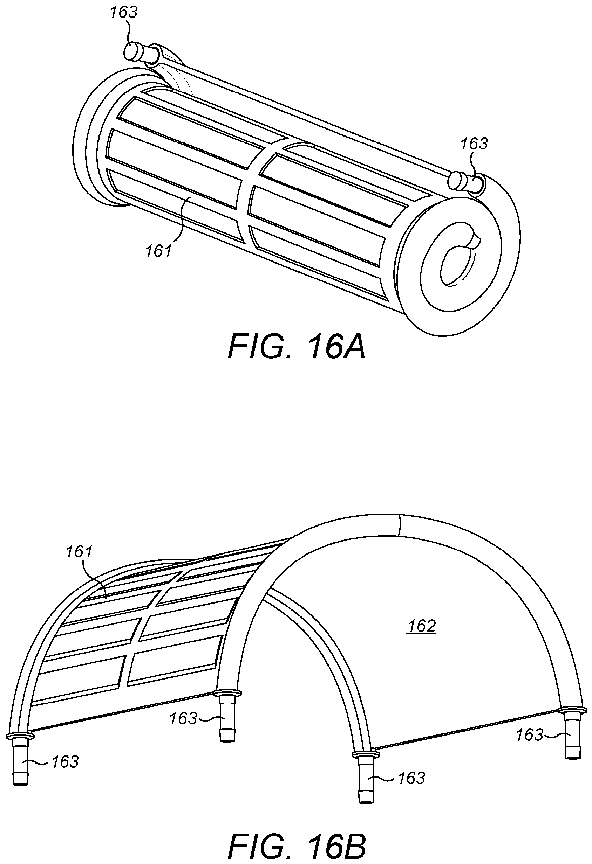

In Fig. 16A and 16B, the solar cell 161 is adhered to a backing 162 made of a shape memory material that in an unstressed state will naturally tend to the deployed configuration shown in Fig. 16B. However, the material can be rolled into the configuration shown in Fig. 16A for storage. On site, the material is unrolled and will naturally take on its deployed configuration. Posts 163 in each corner are anchored to supports to maintain the arcuate shape.

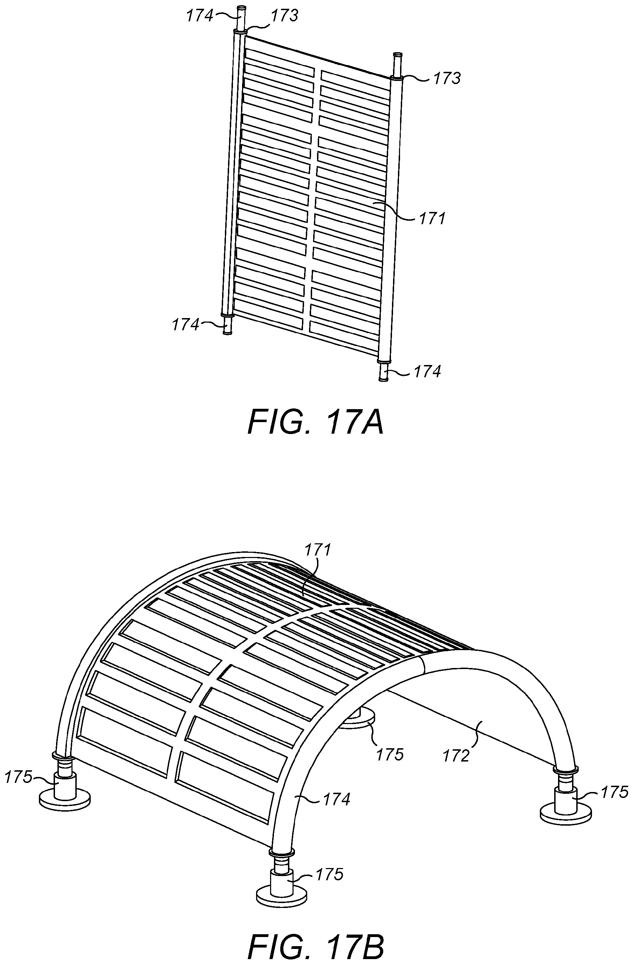

In the example of Figs. 17A and Fig. 17B, the solar cell 171 may be adhered to a flexible backing 172 and a pair of elongate sleeves 173 are formed running along opposite sides of the sheet. The sleeves 173 may be formed on either the solar cell material or the flexible backing. This may be back on itself and anchored in place by stitching and/or bonding to form the sleeve. A pair of flexible poles 174 are slid into the sleeves 173 and these can be bent into the positions in Fig. 17B and anchored into anchors 175.

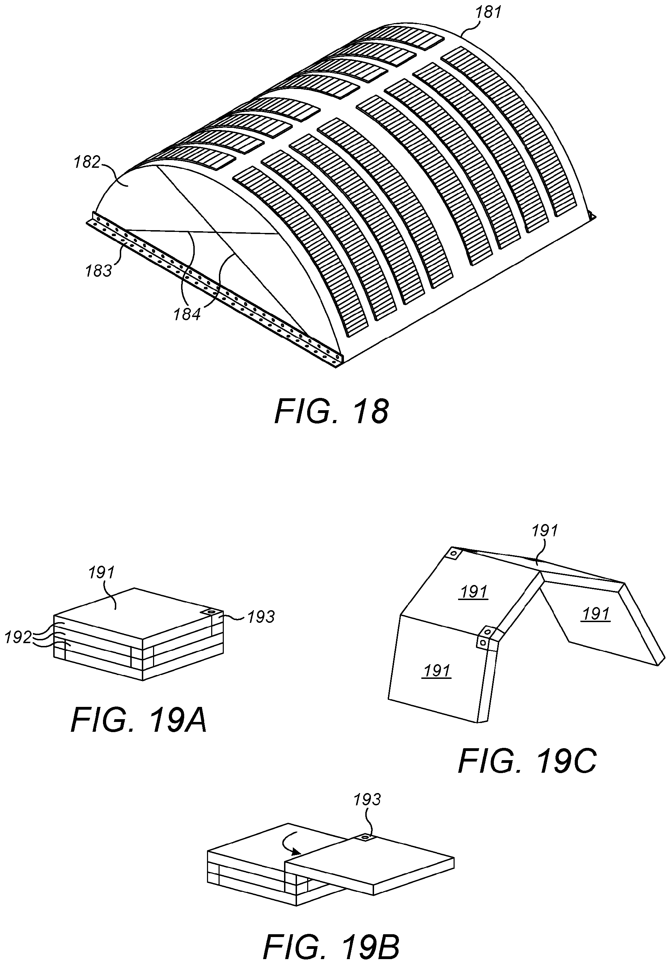

In Fig. 18, the solar cell 181 is adhered to a flexible sheet 182 which is anchored to a rigid base 183 and is held in place by a number of cable connections 184.

In Figs. 19A to 19C, a number of solar cells 191 are bonded to panels 192 which are connected by a plurality of hinges 193 such that they can be supplied in the stacked configuration in Fig. 19A and unfolded in the manner shown in Fig. 19B into the fully unfolded configuration shown in Fig. 19C. The hinges are configured to lock in the deployed configuration. Further, the edges of the panels may be designed to abut one another in the locked configuration to maintain the rigidity of the deployed frame.

## Claims

1. A method of making a solar module comprising:
forming an arcuate frame (10); and
adhesively bonding a solar cell (12) formed of a flexible sheet of a thin film organic photovoltaic solar material to the frame or to a flexible backing attachable to the frame to at least partially cover an upwardly facing part of the frame;
once fixed to the frame, the flexible sheet being curved with a curvature which corresponds to the curvature of the arcuate frame.

2. A method according to claim 1, further comprising providing the thin film organic photovoltaic material on a roll and cutting the sheet from the roll prior to bonding it to the frame.

3. A method according to any preceding claim, wherein the frame comprises a plurality of arcuate subassemblies.

4. A method according to any preceding claim, wherein the frame is deployable between a stored and a deployed configuration.

5. A method according to claim 4, wherein the sheet is attached to the frame after it is deployed to the deployed configuration.

6. A method according to claim 4, wherein the frame is an inflatable structure which is deployable into the deployed configuration by inflation.

7. A method according to claim 4, wherein the frame is formed of a bi-stable material in which the stored configuration comprises a flat roll of material, and the deployed configuration is an unrolled configuration in which the bi-stable material biases the material from the flat roll into an arcuate configuration.

8. A method of retrofitting at least one solar photovoltaic cell across the top of a structure in the form of a poly-tunnel or glasshouse; the method comprising the step of:
forming a module according to any preceding claim, and
positioning the frame, and at least one solar photovoltaic cell mounted on the frame, adjacent to the structure such that the frame is separate from the structure, and such that the frame and the at least one solar photovoltaic cell extend across the top of the structure.

9. A method according to claim 8, wherein the frame is positioned over the outside of the structure.

10. A solar module comprising an arcuate frame (10); and
a solar cell (12) in a form of a sheet of flexible thin film organic photovoltaic solar material adhesively bonded to the frame to at least partially cover an upwardly facing part of the frame or to a flexible backing attachable to the frame, once fixed to the frame, the flexible sheet being curved with a curvature which corresponds to the curvature of the arcuate frame.

11. A solar module according to claim 10, wherein in the frame is deployable between a stored and a deployed configuration.

12. A solar module according to claim 11 wherein the frame is formed of a bi-stable material in which stored configuration comprises a flat roll of material, and the deployed configuration is an unrolled configuration in which the bi-stable biases the material from the flat roll into an arcuate.

13. A solar module according to claim 10, where in the frame is a modular construction.

14. An assembly comprising a structure in the form of a poly-tunnel or glasshouse and comprising a solar module according to claim 10 to 13, wherein the frame is separate from, adjacent to, and extending across the top of the structure such that the at least one solar photovoltaic cell extends across the top surface of the structure.

15. An assembly according to claim 14, wherein the at least one solar photovoltaic cell covers no more than 30% of the surface area of the structure.

## Patentansprüche

1. Verfahren zur Herstellung eines Solarmoduls, das umfasst:
Bilden eines bogenförmigen Rahmens (10); und
Adhäsives Kleben einer Solarzelle (12), die aus einer elastischen Folie aus einem organischen Dünnschichtphotovoltaik-Solarmaterial gebildet ist, auf den Rahmen oder auf einen auf dem Rahmen befestigbaren elastischen Träger, um zumindest teilweise einen nach oben gerichteten Teil des Rahmens abzudecken;
wobei die elastische Folie nach der Befestigung auf dem Rahmen mit einer Krümmung gekrümmt wird, die der Krümmung des bogenförmigen Rahmens entspricht.

2. Verfahren nach Anspruch 1, das weiter die Bereitstellung des organischen Dünnschichtphotovoltaikmaterials auf einer Rolle und das Abschneiden der Folie von der Rolle umfasst, bevor diese auf den Rahmen geklebt wird.

3. Verfahren nach einem der vorhergehenden Ansprüche, wobei der Rahmen eine Vielzahl von bogenförmigen Baugruppen umfasst.

4. Verfahren nach einem der vorhergehenden Ansprüche, wobei der Rahmen zwischen einer gelagerten und einer bereitgestellten Konfiguration einsetzbar ist.

5. Verfahren nach Anspruch 4, wobei die Folie am Rahmen befestigt wird, nachdem sie in die bereitgestellte Konfiguration eingesetzt wird.

6. Verfahren nach Anspruch 4, wobei der Rahmen ein aufblasbarer Aufbau ist, der in die bereitgestellte Konfiguration durch Aufblasen einsetzbar ist.

7. Verfahren nach Anspruch 4, wobei der Rahmen aus einem bistabilen Material gebildet ist, in dem die gelagerte Konfiguration eine flache Materialrolle umfasst, und die eingesetzte Konfiguration eine abgerollte Konfiguration ist, in der das bistabile Material das Material von der flachen Rolle in eine bogenförmige Konfiguration spannt.

8. Verfahren zum Umbau mindestens einer Photovoltaik-Solarzelle quer über das obere Ende eines Aufbaus in der Form eines Polytunnels oder Glashauses; wobei das Verfahren die folgenden Schritte umfasst:
Bilden eines Moduls nach einem der vorhergehenden Ansprüche; und
Positionieren des Rahmens, und zumindest einer auf dem Rahmen befestigten Photovoltaik-Solarzelle benachbart zu dem Aufbau derart, dass der Rahmen von dem Aufbau getrennt ist, und derart, dass der Rahmen und die mindestens eine Photovoltaik-Solarzelle sich quer über das obere Ende des Aufbaus erstrecken.

9. Verfahren nach Anspruch 8, wobei der Rahmen an der Außenseite des Aufbaus positioniert wird.

10. Solarmodul, das einen bogenförmigen Rahmen (10) umfasst; und
eine Solarzelle (12) in Form einer Folie aus einem elastischen organischen Dünnschichtphotovoltaik-Solarmaterial, die adhäsiv auf den Rahmen geklebt wird, um zumindest teilweise einen nach oben gerichteten Teil des Rahmens abzudecken, oder auf einen an dem Rahmen befestigbaren elastischen Träger geklebt wird, wobei die elastische Folie nach der Befestigung auf dem Rahmen mit einer Krümmung gekrümmt wird, die der Krümmung des bogenförmigen Rahmens entspricht.

11. Solarmodul nach Anspruch 10, wobei der Rahmen zwischen einer gelagerten und einer bereitgestellten Konfiguration einsetzbar ist.

12. Solarmodul nach Anspruch 11, wobei der Rahmen aus einem bistabilen Material gebildet ist, in dem die gelagerte Konfiguration eine flache Materialrolle umfasst, und die eingesetzte Konfiguration eine abgerollte Konfiguration ist, in der das bistabile Material das Material von der flachen Rolle in eine bogenförmige Konfiguration spannt.

13. Solarmodul nach Anspruch 10, wobei in dem Rahmen eine modulare Bauweise vorliegt.

14. Zusammenbau, der einen Aufbau in der Form eines Polytunnels oder Glashauses aufweist und ein Solarmodul nach Anspruch 10 bis 13 umfasst, wobei der Rahmen von dem oberen Ende getrennt benachbart ist, und sich quer über das obere Ende des Aufbaus derart erstreckt, dass sich die mindestens eine Photovoltaik-Solarzelle quer über die Oberseite des Aufbaus erstreckt.

15. Zusammenbau nach Anspruch 14, wobei die mindestens eine Photovoltaik-Solarzelle nicht mehr als 30% der Fläche des Aufbaus bedeckt.

## Revendications

1. Procédé de fabrication d'un module solaire comprenant les étapes consistant à :
former un cadre arqué (10) ; et
lier de manière adhésive une cellule solaire (12) formée d'une feuille flexible d'un matériau solaire photovoltaïque organique à film mince au cadre ou à un support flexible pouvant être fixé au cadre pour recouvrir au moins partiellement une partie tournée vers le haut du cadre ;
une fois fixée au cadre, la feuille flexible étant courbée avec une courbure qui correspond à la courbure du cadre arqué.

2. Procédé selon la revendication 1, comprenant en outre les étapes consistant à fournir le matériau photovoltaïque organique à film mince sur un rouleau et à découper la feuille dans le rouleau avant de la lier au cadre.

3. Procédé selon l'une des revendications précédentes, dans lequel le cadre comprend une pluralité de sous-ensembles arqués.

4. Procédé selon l'une des revendications précédentes, dans lequel le cadre est déployable entre une configuration rangée et une configuration déployée.

5. Procédé selon la revendication 4, dans lequel la feuille est fixée au cadre après son déploiement dans la configuration déployée.

6. Procédé selon la revendication 4, dans lequel le cadre est une structure gonflable qui est déployable dans la configuration déployée par gonflage.

7. Procédé selon la revendication 4, dans lequel le cadre est formé d'un matériau bistable dans lequel la configuration rangée comprend un rouleau plat de matériau, et la configuration déployée est une configuration déroulée dans laquelle le matériau bistable sollicite le matériau pour passer du rouleau plat à une configuration arquée.

8. Procédé de réaménagement d'au moins une cellule photovoltaïque solaire en haut d'une structure sous forme de polytunnel ou de serre ; le procédé comprenant l'étape consistant à :
former un module selon l'une des revendications précédentes, et
positionner le cadre, et au moins une cellule photovoltaïque solaire montée sur le cadre, de manière adjacente à la structure de sorte que le cadre soit séparé de la structure, et de sorte que le cadre et l'au moins une cellule photovoltaïque solaire s'étendent en haut de la structure.

9. Procédé selon la revendication 8, dans lequel le cadre est positionné sur l'extérieur de la structure.

10. Module solaire comprenant un cadre arqué (10) ; et
une cellule solaire (12) sous forme d'une feuille de matériau solaire photovoltaïque organique à film mince flexible liée de manière adhésive au cadre pour recouvrir au moins partiellement une partie tournée vers le haut du cadre ou à un support flexible pouvant être fixé au cadre, une fois fixée au cadre, la feuille flexible étant courbée avec une courbure qui correspond à la courbure du cadre arqué.

11. Module solaire selon la revendication 10, dans lequel le cadre est déployable entre une configuration rangée et une configuration déployée.

12. Module solaire selon la revendication 11, dans lequel le cadre est formé d'un matériau bistable dans lequel la configuration rangée comprend un rouleau plat de matériau, et la configuration déployée est une configuration déroulée dans laquelle le matériau bistable sollicite le matériau pour passer du rouleau plat à une configuration arquée.

13. Module solaire selon la revendication 10, dans lequel le cadre est une construction modulaire.

14. Ensemble comprenant une structure sous la forme d'un polytunnel ou d'une serre et comprenant un module solaire selon les revendications 10 à 13, dans lequel le cadre est séparé de, adjacent à, et s'étendant en haut de la structure de sorte que l'au moins une cellule photovoltaïque solaire s'étend sur la surface supérieure de la structure.

15. Ensemble selon la revendication 14, dans lequel l'au moins une cellule photovoltaïque solaire ne couvre pas plus de 30% de la superficie de la structure.
